# EUROPÄISCHE PATENTSCHRIFT

(11) **EP 2 118 508 B1**
(45) Veröffentlichungstag und Bekanntmachung des Hinweises auf die Patenterteilung: **17.08.2011**
(21) Anmeldenummer: 08709168.2
(22) Anmeldetag: 21.02.2008
(51) Int. Cl.: F16D 23/02

(54) **SYNCHRONRING FÜR EINE SYNCHRONISIERUNGSEINRICHTUNG**
SYNCHRONIZER RING FOR A SYNCHRONIZATION DEVICE
BAGUE DE SYNCHRONISATION POUR UN DISPOSITIF DE SYNCHRONISATION

(30) Priorität: 06.03.2007 DE 102007010764
(43) Veröffentlichungstag der Anmeldung: 18.11.2009
(73) Patentinhaber: ZF Friedrichshafen AG, 88038 Friedrichshafen (DE)
(72) Erfinder: CHRISTIAN, Klaus, 88677 Markdorf (DE); BIBERGER, Peter, 88069 Tettnang (DE); GRASWALD, Christoph, 88131 Lindau (DE)
(86) Internationale Anmeldenummer: PCT/EP2008/052138
(87) Internationale Veröffentlichungsnummer: WO 2008/107315

(56) Entgegenhaltungen:
- EP-A- 0 063 227
- EP-A- 0 460 513
- EP-A- 1 024 310
- EP-A- 1 632 688
- DE-A1- 2 744 994
- DE-C1- 3 417 813
- JP-A- 2006 009 953
- US-A- 4 878 282
- US-A- 5 038 628
- US-A- 5 890 572

## Beschreibung

Die vorliegende Erfindung betrifft einen Synchronring und eine Synchronisierungseinrichtung gemäß der jeweils im Oberbegriff des Patentanspruches 1 bzw. 9 näher definierten Art.

Aus der Fahrzeugtechnik sind Synchronisierungseinrichtungen zum Synchronisieren von Losrädern an einer Welle eines Fahrzeuggetriebes bekannt. Üblicherweise umfasst die Synchronisierungseinrichtung zumindest einen Synchronring und wenigstens einen Kupplungskörper. Der Kupplungskörper ist formschlüssig mit dem zu synchronisierenden Losrad verbunden. Der Synchronring ist formschlüssig mit einer Schaltmuffe verbindbar, welche wiederum über einen Synchronkörper drehfest mit der Welle des Fahrzeuggetriebes verbunden ist. Zum Synchronisieren des Losrades wird der Synchronring mit dem Kupplungskörper reibschlüssig verbunden.

Die während der Synchronisierung aneinander reibenden Reibflächen des Synchronringes und des Kupplungskörpers werden durch die entstehende Reibung erwärmt, so dass eine Kühlung der jeweiligen Reibflächen an dem Synchronring und dem Kupplungskörper erforderlich ist.

Es ist auch bekannt, dass bei Synchronisierungseinrichtungen in so genannten Rangegetrieben an dem Außenkonus des ringförmigen Kupplungskörpers eine radial innen umlaufende Ringnut zum Auffangen des über radiale Bohrungen der Welle transportierte Kühl- und Schmieröl vorgesehen ist. Während der Synchronphase sind die Reibfläche des Außenkonus des Kupplungskörpers und die Reibfläche eines Innenkonus des Synchronringes aufeinander gepresst. Somit wird verhindert, dass das Öl zur Kühlung an die Reibflächen des Synchronringes und des Kupplungskörpers gelangt.

Um die jeweiligen Reibflächen auch während der Synchronphase mit Öl zu versorgen, sind bei der bekannten Synchronisierungseinrichtung radiale Bohrungen an dem Außenkonus des Kupplungskörpers vorgesehen, welche das aus der umlaufenden Ringnut vorhandene Öl zur Oberfläche des Außenkonus des Kupplungskörpers transportieren. Die Oberfläche des Außenkonus weist axial verlaufende Nuten zur Ölverteilung auf. Auf diese Weise können die miteinander in Kontakt stehenden Reibflächen des Synchronringes und des Kupplungskörpers mit Kühlöl versorgt werden.

Es hat sich jedoch gezeigt, dass durch die an der Stirnseite des Außenkonus radial verlaufenden Bohrungen eine mechanische Schwächung dieses Stirnbereiches des Außenkonus des Kupplungskörpers auftritt. Somit besteht die Gefahr, dass aufgrund von Wärmespannungen Risse an dem Außenkonus des Kupplungskörpers auftreten.

Aus der Druckschrift DE 34 17 813 C1 ist die Verwendung von Streusinter-Reibbelägen bei Synchronringen oder Gleichlaufringen von Synchronisierungseinrichtungen bekannt. Diese Reibbeläge können in axialer Richtung Drainagenuten zur Ölverdrängung während der Herstellung des Reibschlusses zwischen den entsprechenden Bauteilen aufweisen. Die Druckschrift DE 27 44 994 C2 beschreibt ein Herstellungsverfahren für einen Synchronring, der in seinem Reibbelag ebenfalls in axialer Richtung verlaufende Nuten zum Öltransport aufweist.

Darüber hinaus ist aus der Druckschrift DE 20 55 345 eine Synchronisierung für Schaltgetriebe bekannt. Der Synchronring der offenbarten Synchronisierungseinrichtung weist axial verlaufende Vertiefungen auf, in denen der Reibbelag eingepasst ist, so dass axial verlaufende Mulden in dem Reibbelag des Synchronringes vorgesehen sind.

Schließlich offenbart die Druckschrift EP 0 122 562 B1 einen Synchronring für ein Fahrzeuggetriebe, bei dem der Reibbelag des Innenkonus des Synchronringes Axialnuten aufweist. Zusätzlich sind an dem Reibbelag Umfangsrillen vorgesehen.

Der vorliegenden Erfindung liegt die Aufgabe zugrunde, einen Synchronring für eine Synchronisierungseinrichtung vorzuschlagen, welche eine verbesserte Kühlung während der Synchronisierungsphase realisieren.

Diese Aufgabe wird hinsichtlich des Synchronringes durch die Merkmale des Patentanspruches 1 und bezüglich der Synchronisierungseinrichtung durch die Merkmale des Patentanspruches 9 gelöst. Vorteilhafte Ausgestaltungen ergeben sich insbesondere aus den jeweiligen Unteransprüchen.

Die der Erfindung zugrunde liegende Aufgabe wird durch einen Synchronring einer Synchronisierungseinrichtung mit einem ringförmigen Grundkörper gelöst, an dem ein Innenkonus angeformt ist, an dem eine Reibfläche vorgesehen ist, wobei der Innenkonus zumindest eine Ringnut oder dergleichen aufweist und wobei der ringförmige Reibbelag an jedem Rand mehrere über den Umfang verteilt angeordnete axiale Nuten aufweist, die jeweils mit der Ringnut strömungsmäßig verbunden sind.

Vorzugsweise kann vor dem Aufbringen des Reibbelages auf den Synchronring eine Ringnut in die Oberfläche des Synchronringes bzw. in den Innenkonus eingebracht werden. Dabei ist es wichtig, dass die Länge der axialen Nuten in dem Reibbelag so bemessen ist, dass die Ringnut zumindest mit den Axialnuten strömungsmäßig verbunden ist. Auf diese Weise wird sichergestellt, dass das Öl von der einen Seite durch die Axialnut eindringen und durch die als Kanal ausgebildete Ringnut in die zum anderen Rand des Reibbelages führenden Axialnut transportiert wird.

Vorzugsweise kann die Ringnut mittig an dem Innenkonus verlaufen. Wie auch schon bei den vorhergehenden Ausgestaltungen des Synchronringes können die axialen Nuten an jedem Rand der Reibfläche bevorzugt zueinander versetzt angeordnet sein.

Unabhängig von der Ausführungsform des Synchronringes kann die Tiefe jeder axialen Nut etwa der Dicke des Reibbelages entsprechen. Es sind auch andere Ausführungen denkbar. Des Weiteren kann die Länge jeder Nut so bemessen sein, dass die Ringnut des Synchronringes von der Nut zumindest angeschnitten wird. Auf diese Weise ist eine strömungsmäßige Verbindung zwischen jeder Axialnut und der Ringnut gewährleistet. Es sind auch andere konstruktive Ausführungen der Nuten denkbar, um eine Verbindung mit der Ringnut zu schaffen.

Ebenfalls unabhängig von den vorgeschlagenen Ausführungsvarianten des Synchronringes kann z. B. ein organischer Werkstoff als Reibbelag für den Synchronring vorgesehen sein. Vorzugsweise kann Karbon oder dergleichen als Werkstoff verwendet werden. Diese Wahl des Werkstoffes für den Reibbelag bietet den Vorteil, dass auf einfachste Weise Profilierungen an dem Reibbelag vorgenommen werden können.

Schließlich wird die der Erfindung zugrunde liegende Aufgabe auch durch eine Synchronisierungseinrichtung zum Synchronisieren von Lösrädern eines Fahrzeuggetriebes gelöst, mit zumindest einem Synchronring und einem zugeordneten Kupplungskörper, wobei die erfindungsgemäße Synchronisierungseinrichtung zumindest den vorgeschlagenen Synchronring umfasst. Somit wird durch die vorliegende Erfindung nicht nur ein vorgeschlagener Synchronring separat beansprucht, sondern auch die gesamte Synchronisierungseinrichtung, die insbesondere die vorgeschlagenen Bauteile verwendet. Auf diese Weise wird die Lebensdauer der Synchronisierungseinrichtung und der dazugehörigen Bauteile erhöht.

Beispielsweise können die vorgeschlagenen Ausführungsformen auch mit bereits bekannten Ausführungen kombiniert werden. Es ist auch denkbar, dass die Profilierungen insbesondere an dem Reibbelag durch zueinander beabstandete Einzelelemente realisiert werden, die dann zusammen den Reibbelag bilden.

Nachfolgend wird die vorliegende Erfindung anhand der Zeichnungen näher erläutert.

Es zeigen:
- Fig. 1: eine Ansicht einer möglichen Ausführungsform eines Kupplungskörpers für eine Synchronisierungseinrich- tung mit stirnseitigen Ausnehmungen;
- Fig. 2: eine Draufsicht auf den Kupplungskörper gemäß Fig. 1;
- Fig. 3: eine Draufsicht auf einen in die Ebene abgerollten Reibbelag ei- nes Synchronringes für eine Synchronisie- rungseinrichtung;
- Fig. 4: eine quer geschnittene Ansicht des Reibbelages entlang der Schnittlinie I-I gemäß Fig. 3;
- Fig. 5: eine Draufsicht auf einen in die Ebene abgerollten Reibbelag ei- ner zweiten Ausführungsform des Synchronringes;
- Fig. 6: eine quer geschnittene Ansicht des Reibbelages entlang der Schnittlinie II-II gemäß Fig. 5;
- Fig. 7: eine Teilansicht einer Synchronisierungseinrichtung mit einem Synchronring gemäß einer dritten Ausführungsform;
- Fig. 8: eine seitliche Teilansicht des Synchronringes und des Kupplungs- körpers gemäß Fig. 7;
- Fig. 9: eine Draufsicht auf einen in die Ebene abgerollten Reibbelag ei- ner vierten erfindungsgemäßen Ausführungsform des Synchronringes und
- Fig. 10: eine quer geschnittene Ansicht des Synchronringes entlang der Schnittlinie III-III gemäß Fig. 9.

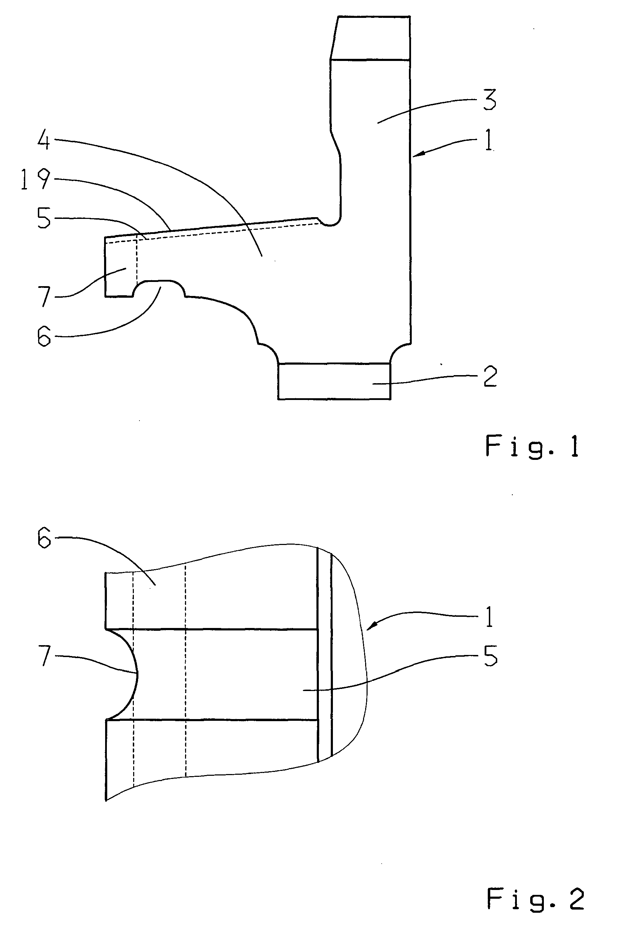

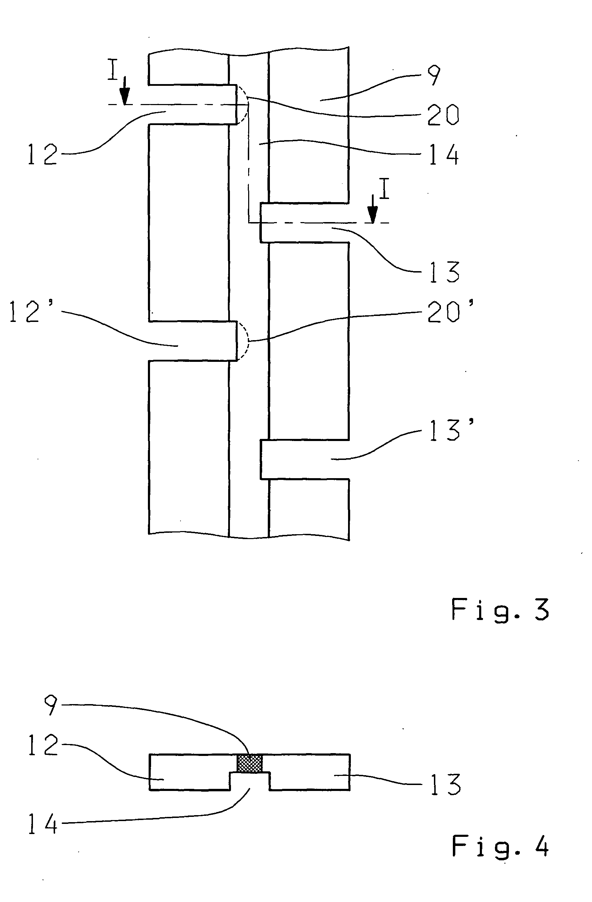

In den Fig. 1 und 2 ist eine mögliche Ausführungsform eines Kupplungskörpers für eine Synchronisierungseinrichtung gezeigt, wobei die Fig. 3 bis 10 verschiedene Ausführungsformen eines Synchronringes für eine Synchronisierungseinrichtung darstellen.

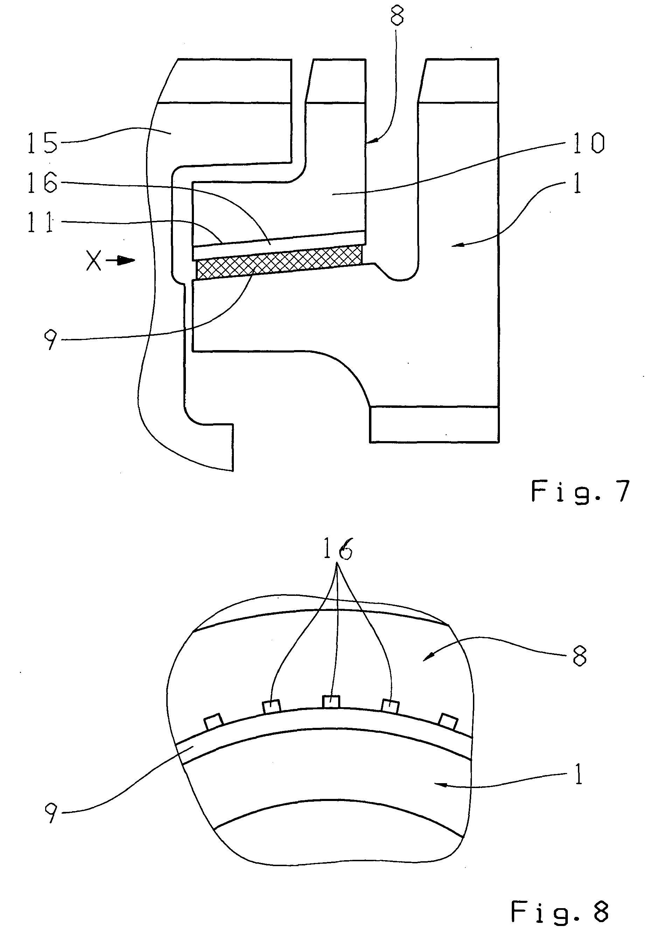

Die nur teilweise in Fig. 7 angedeutete Synchronisierungseinrichtung wird üblicherweise zum Synchronisieren von Losrädern an einer Welle eines Fahrzeuggetriebes verwendet und umfasst zumindest einen Synchronring 8 und wenigstens einen Kupplungskörper 1. Der Kupplungskörper 1 ist formschlüssig über eine Verzahnung 2 mit dem nicht weiter dargestellten Losrad der Welle, welches synchronisiert werden soll, verbunden. Der Synchronring 8 ist, unabhängig von seiner gewählten Ausführungsform, formschlüssig mit einer Schaltmuffe verbindbar, welche wiederum über einen Synchronkörper 15 drehfest mit der Welle des Fahrzeuggetriebes verbunden ist. Zum Synchronisieren des Losrades wird der Synchronring 8 mit dem Kupplungskörper 1 über die jeweiligen Reibflächen reibschlüssig verbunden.

Um die an den Reibflächen des Synchronringes 8 und des Kupplungskörpers 1 entstehende Wärme abzuführen und somit eine ausreichende Kühlung sicherzustellen, werden die Reibflächen mit einem Kühlmittel, wie z. B. Öl, beaufschlagt.

Der vorgeschlagene Kupplungskörper 1 weist einen ringförmigen Grundkörper 3 auf, an den ein Außenkonus 4 mit einer Reibfläche 19 angeformt ist. Die Reibfläche 19 des Außenkonus 4 weist mehrere axial verlaufende Abflachungen 5 auf. Radial innen an dem Außenkonus 4 ist eine ringförmige Ölfangnut 6 zum Auffangen des von der Welle durch entsprechende Bohrungen bereitgestellten Öls vorgesehen. Um das in der Ölfangnut 6 gesammelte bzw. aufgefangene Öl zur Reibfläche 19 des Außenkonus 4 des Kupplungskörpers 1 zu transportieren, sind stirnseitig an dem Außenkonus 4 Ausnehmungen 7 in radialer Richtung vorgesehen. Die Ausnehmungen 7 sind als radiale Ausfräsungen über den Umfang verteilt angeordnet, wie dies aus Fig. 2 ersichtlicht ist.

Die stirnseitigen Ausnehmungen 7 verbinden die Ölfangnut 6 mit den Abflachungen 5, so dass das in der Ölfangnut 6 gesammelte Öl aufgrund der Zentrifugalkraft über die Ausnehmungen 7 in die Abflachungen 5 gelangen kann. Durch die axial verlaufenden Abflachungen 5 kann das Öl dann die gesamte Reibfläche 19 des Außenkonus 4 benetzen.

Diese Ausgestaltung kann vornehmlich bei Synchronisierungseinrichtungen verwendet werden, bei denen der Kupplungskörper 1 eine Reibfläche 19 aus Stahl aufweist und der Synchronring 8 mit einem aus Molybdän bestehenden Reibbelag 9 versehen ist.

In den Fig. 3 und 4 ist eine mögliche erste Ausführungsform eines Synchronringes 8 für eine Synchronisierungseinrichtung dargestellt. Der Synchronring 8 umfasst einen ringförmigen Grundkörper 10, an den ein Innenkonus 11 angeformt ist, auf dessen Oberfläche ein Reibbelag 9 aufgebracht ist, wobei in Fig. 3 und 4 lediglich der Reibbelag 9 des Synchronringes 8 dargestellt ist. Fig. 3 zeigt den in die Ebene abgerollten Reibbelag 9 des Synchronringes 8.

Bei dieser Ausführungsform ist der Reibbelag 9 ringförmig ausgeführt und weist an jedem Randbereich mehrere axial verlaufende Nuten 12, 12' und 13, 13' auf. Sowohl die Nuten 12, 12' als auch die Nuten 13, 13' weisen eine Länge auf, die so bemessen ist, dass die Nuten 12, 12' und 13, 13' eine mittig auf dem Reibbelag 9 angeordnete Ringnut 14 anschneiden. Der Auslauf 20, 20' jeder Nut 12, 12' kann, wie in Fig. 3 mittels gestrichelter Linie angedeutet, im Längsschnitt eine Bogenform mit vorbestimmtem Radius aufweisen. Es sind auch andere Formen möglich.

Wie insbesondere aus Fig. 4 ersichtlich ist, wird die Tiefe jeder Nut 12, 12' und 13, 13' so bemessen, dass sie etwa der Dicke des Reibbelages 9 entspricht. Ferner sind die Nuten 12, 12' jeweils zu den Nuten 13, 13' an dem gegenüberliegenden Rand des Reibbelages 9 versetzt angeordnet. Bei dieser Profilierungsvariante des Reibbelages 9 des Synchronringes 8 kann das Öl jeweils in die stirnseitig angeordneten Nuten 12, 12' eindringen, um dann in der Ringnut 14 tangential transportiert zu werden und um schließlich durch die Nuten 13, 13' wieder auszutreten. Durch die tangentiale Relativbewegung des Kupplungskörpers 1 relativ zum Reibbelag 9 des Synchronringes 8 werden die Reibflächen während des Synchronvorganges benetzt und gekühlt. Somit ermöglicht die Ringnut 14 mit den angeschlossenen Nuten 12, 12' und 13, 13' eine Öldurchspülung und damit einen verbesserten Wärmeabtransport an den Reibflächen des Synchronringes 8 und des Kupplungskörpers 1.

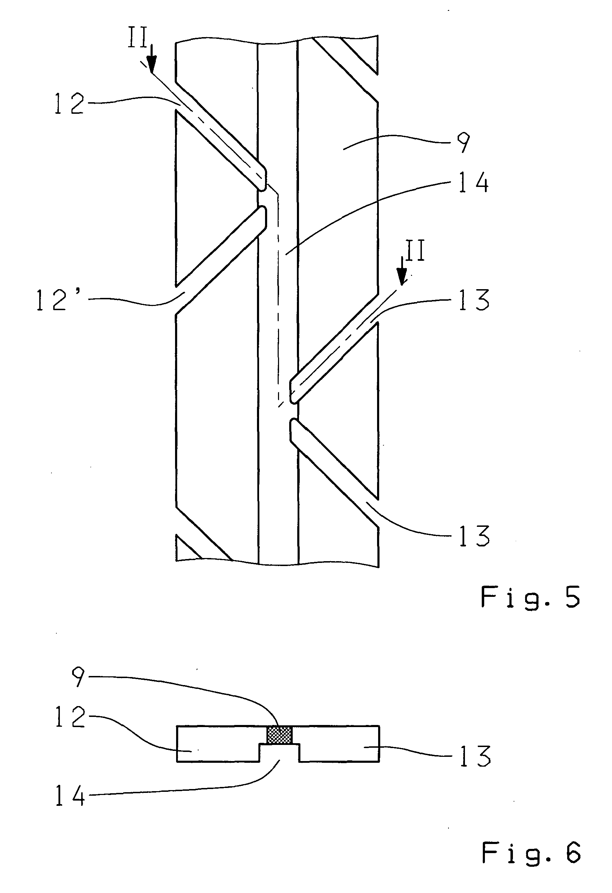

In den Fig. 5 und 6 ist eine zweite Ausführungsvariante des Synchronringes 8 dargestellt. Bei dieser Ausführungsvariante weist der Reibbelag 9 im Gegensatz zur ersten Ausführungsform gemäß der Fig. 3 und 4 jeweils an den Rändern des Reibbelages 9 schräg verlaufende Nuten 12, 12' und 13, 13' auf. Dabei sind jeweils zwei benachbarte Nuten 12 und 12' bzw. 13 und 13' spiegelsymmetrisch zueinander angeordnet. Bei dieser weiteren Profilierungsvariante ergibt sich der Vorteil, dass durch die schräg verlaufenden Nuten 12, 12' und 13, 13' unabhängig von der Drehrichtung des Synchronringes 8 das Öl in die Nuten 12, 12' und 13, 13' quasi hineingeschaufelt wird. Durch diesen Fördereffekt wird der Volumenstrom durch die Nuten 12, 12' und 13, 13' vergrößert und infolgedessen die Kühlung weiter verbessert.

In den Fig. 7 und 8 ist eine dritte Ausführungsform des Synchronringes 8 dargestellt, wobei Fig. 7 eine Teilansicht einer möglichen Synchronisierungseinrichtung mit dem Synchronring 8, dem Kupplungskörper 1 und einem Synchronkörper 15 zeigt. Bei dieser Ausführungsvariante ist vorgesehen, dass der Synchronring 8 an seinem Innenkonus 11 mehrere Axialnuten 16 aufweist. Die Axialnuten 16 sind über den Umfang des Innenkonus 11 in einem vorbestimmten Abstand zueinander verteilt angeordnet.

Die Axialnuten 16 sind oberhalb des Reibbelages 9 vorgesehen. Dies ist sowohl aus Fig. 7 als auch Fig. 8 ersichtlich. Die Axialnuten 16 können durch ein geeignetes Pressverfahren vor dem Aufbringen des Reibbelages 9 hergestellt werden. Der Reibbelag 9 liegt somit nur auf Stegbereichen zwischen den Axialnuten 16 auf, wie insbesondere aus Fig. 8 ersichtlich ist. Dadurch besteht die Möglichkeit, dass der Reibbelag 9 durch die Axialnuten 16 gekühlt wird. Die Axialnuten 16 werden z. B. mit Öl aus der nicht weiter dargestellten Ölfangnut 6 des Kupplungskörpers 1 versorgt. Auf diese Weise kann das Öl stirnseitig in die Axialnuten 16 eintreten und dann die Axialnuten 16 durchströmen. Dadurch wird der Reibbelag 9 gekühlt und die entstehende Wärme durch das Öl abgeführt.

Bevorzugt weisen die Axialnuten 16 einen konischen Verlauf auf, so dass aufgrund der Zentrifugalkraft ein Pumpeneffekt in den Axialnuten 16 bewirkt wird, der den Volumenstrom des Öls weiter erhöht und somit den Kühleffekt verstärkt.

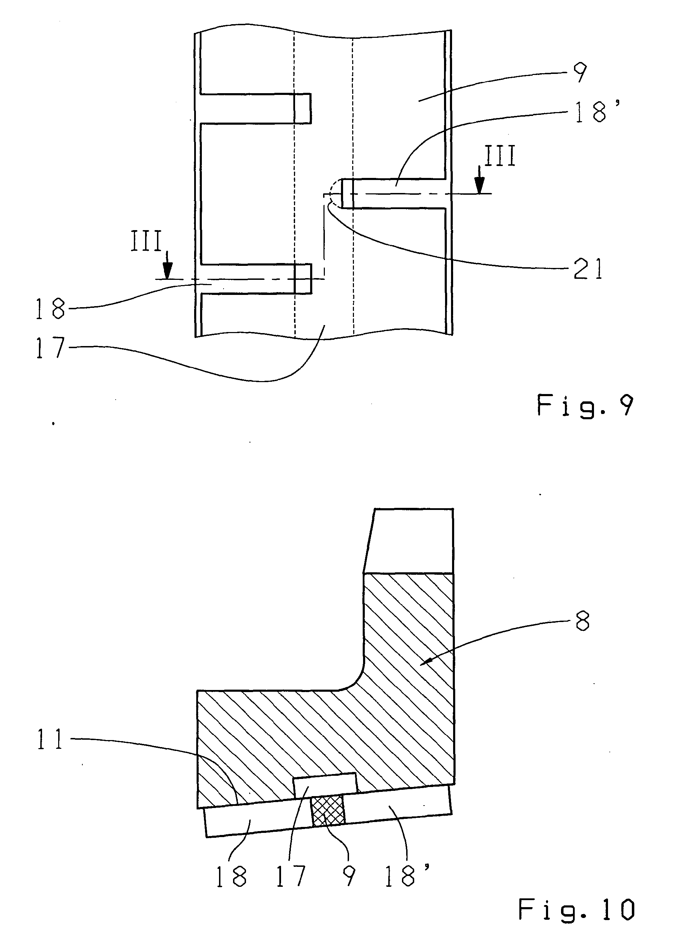

In den Fig. 9 und 10 ist eine vierte, erfindungsgemäße Ausführungsvariante des Synchronringes 8 dargestellt. Bei dieser Profilierungsvariante weist der Innenkonus 11 des Synchronringes 8 eine Ringnut 17 auf, welche etwa mittig an der Oberfläche des Innenkonus 11 angeordnet ist. Die Ringnut 17 wird von den axial im Reibbelag 9 verlaufenden Nuten 18, 18' zumindest angeschnitten. Auf diese Weise kann Öl von der stirnseitigen Nut 18 in die Ringnut 17 gelangen, um dann durch die innenseitige Nut 18' aus dem Reibverband wieder austreten zu können. Folglich wird auch bei dieser Ausführungsvariante eine optimale Kühlung des Reibbelages 9 des Synchronringes 8 gewährleistet.

### Bezugszeichen

- 1: Kupplungskörper
- 2: Verzahnung
- 3: Grundkörper des Kupplungskörpers
- 4: Außenkonus
- 5: Abflachung
- 6: Ölfangnut
- 7: Ausnehmung
- 8: Synchronring
- 9: Reibbelag des Synchronringes
- 10: Grundkörper des Synchronringes
- 11: Innenkonus
- 12, 12': axial verlaufende Nut
- 13, 13': axial verlaufende Nut
- 14: Ringnut an dem Reibbelag
- 15: Synchronkörper
- 16: Axialnut
- 17: Ringnut an dem Innenkonus
- 18, 18': Nut
- 19: Reibfläche des Kupplungskörpers
- 20, 20': Auslauf der Nut
- 21: Auslauf der Nut

## Patentansprüche

1. Synchronring einer Synchronisierungseinrichtung, mit einem ringförmigen Grundkörper (10), an dem ein Innenkonus (11) angeformt ist, an dem ein Reibbelag (9) vorgesehen ist, **dadurch gekennzeichnet, dass** der Innenkonus (11) zumindest eine Ringnut (17) aufweist, und dass der ringförmige Reibbelag (9) an jedem Rand mehrere über den Umfang verteilt angeordnete axiale Nuten (18, 18') aufweist, die jeweils mit der Ringnut (17) strömungsmäßig verbunden sind.

2. Synchronring nach Anspruch 1, **dadurch gekennzeichnet, dass** die Ringnut (17) etwa mittig an der Oberfläche des Innenkonus (11) verläuft.

3. Synchronring nach Anspruch 1 oder 2, **dadurch gekennzeichnet, dass** die jeweils an den Rändern des Reibbelages (9) beginnenden Nuten (18, 18') zueinander versetzt angeordnet sind.

4. Synchronring nach einem der Ansprüche 1 bis 3, **dadurch gekennzeichnet, dass** die Tiefe jeder Nut (18, 18') etwa der Dicke des Reibbelages (9) entspricht.

5. Synchronring nach einem der Ansprüche 1 bis 4, **dadurch gekennzeichnet, dass** der Auflauf (21) jeder Nut (18, 18') im Längsschnitt etwa bogenförmig ist.

6. Synchronring nach einem der Ansprüche 1 bis 5, **dadurch gekennzeichnet, dass** die Länge jeder Nut (18, 18') so bemessen ist, dass die Nut (18, 18') die Ringnut (17) anschneidet.

7. Synchronring nach einem der Ansprüche 1 bis 6, **dadurch gekennzeichnet, dass** ein organischer Werkstoff als Reibbelag (9) des Synchronringes (8) vorgesehen ist.

8. Synchronring nach Anspruch 7, **dadurch gekennzeichnet, dass** Karbon als Werkstoff für den Reibbelag (9) vorgesehen ist.

9. Synchronisierungseinrichtung zum Synchronisieren von Losrädem an einer Welle eines Fahrzeuggetriebes, mit zumindest einem Synchronring (8) nach einem der vorangehenden Ansprüche und einem zugeordneten Kupplungskörper (1).

## Claims

1. Synchronizer ring of a synchronization device, having an annular basic body (10) on which is integrally formed an inner cone (11) on which a friction lining (9) is provided, **characterized in that** the inner cone (11) has at least one annular groove (17), and **in that** the annular friction lining (9) has, on each edge, a plurality of axial grooves (18, 18') arranged distributed over the circumference, which axial grooves are in each case connected in terms of flow to the annular groove (17).

2. Synchronizer ring according to Claim 1, **characterized in that** the annular groove (17) runs approximately centrally on the surface of the inner cone (11).

3. Synchronizer ring according to Claim 1 or 2, **characterized in that** the grooves (18, 18'), which begin in each case at the edges of the friction lining (9), are arranged offset with respect to one another.

4. Synchronizer ring according to one of Claims 1 to 3, **characterized in that** the depth of each groove (18, 18') corresponds approximately to the thickness of the friction lining (9).

5. Synchronizer ring according to one of Claims 1 to 4, **characterized in that** the outlet (21) of each groove (18, 18') is approximately arc-shaped in longitudinal section.

6. Synchronizer ring according to one of Claims 1 to 5, **characterized in that** the length of each groove (18, 18') is dimensioned such that the groove (18, 18') intersects the annular groove (17).

7. Synchronizer ring according to one of Claims 1 to 6, **characterized in that** an organic material is provided as a friction lining (9) of the synchronizer ring (8).

8. Synchronizer ring according to Claim 7, **characterized in that** carbon is provided as a material for the friction lining (9).

9. Synchronization device for synchronizing loose wheels on a shaft of a vehicle transmission, having at least one synchronizer ring (8) according to one of the preceding claims and having an associated clutch body (1).

## Revendications

1. Bague de synchronisation pour un dispositif de synchronisation, comprenant un corps de base (10) de forme annulaire, sur lequel est formé un cône interne (11), sur lequel est prévue une garniture de friction (9), **caractérisée en ce que** le cône interne (11) présente au moins une rainure annulaire (17) et **en ce que** la garniture de friction annulaire (9) présente sur chaque bord plusieurs rainures axiales (18, 18') réparties sur la périphérie, qui sont à chaque fois connectées fluidiquement à la rainure annulaire (17).

2. Bague de synchronisation selon la revendication 1, **caractérisée en ce que** la rainure annulaire (17) s'étend approximativement centralement à la surface du cône interne (11).

3. Bague de synchronisation selon l'une quelconque des revendications 1 ou 2, **caractérisée en ce que** les rainures (18, 18') commençant à chaque fois au niveau des bords de la garniture de friction (9) sont disposées de manière décalée les unes par rapport aux autres.

4. Bague de synchronisation selon l'une quelconque des revendications 1 à 3, **caractérisée en ce que** la profondeur de chaque rainure (18, 18') correspond approximativement à l'épaisseur de la garniture de friction (9).

5. Bague de synchronisation selon l'une quelconque des revendications 1 à 4, **caractérisée en ce que** la sortie (21) de chaque rainure (18, 18') est approximativement en forme d'arc en coupe longitudinale.

6. Bague de synchronisation selon l'une quelconque des revendications 1 à 5, **caractérisée en ce que** la longueur de chaque rainure (18, 18') est dimensionnée de telle sorte que la rainure (18, 18') coupe la rainure annulaire (17).

7. Bague de synchronisation selon l'une quelconque des revendications 1 à 6, **caractérisée en ce qu'**il est prévu un matériau organique en tant que garniture de friction (9) de la bague de synchronisation (8).

8. Bague de synchronisation selon la revendication 7, **caractérisée en ce que** l'on prévoit du carbone comme matériau pour la garniture de friction (9).

9. Dispositif de synchronisation pour synchroniser des pignons fous sur un arbre d'une transmission de véhicule, comprenant au moins une bague de synchronisation (8) selon l'une quelconque des revendications précédentes et un corps d'accouplement (1) associé.
